# EUROPÄISCHE PATENTSCHRIFT

(11) **EP 2 037 225 B1**
(45) Veröffentlichungstag und Bekanntmachung des Hinweises auf die Patenterteilung: **31.08.2011**
(21) Anmeldenummer: 08005216.0
(22) Anmeldetag: 19.03.2008
(51) Int. Cl.: G01D 5/26, G01D 5/347, G05D 1/02

(54) **Verfahren und Vorrichtung zum Bestimmen der Position eines Fahrzeugs, Computerprogramm und Computerprogrammprodukt**
Method and device for determining the position of a vehicle, computer program and computer program product
Procédé et dispositif destinés à la détermination de la position d'un véhicule, programme informatique et produit de programme informatique

(30) Priorität: 12.09.2007 DE 102007043498; 12.09.2007 DE 202007012798 U
(43) Veröffentlichungstag der Anmeldung: 18.03.2009
(73) Patentinhaber: Pepperl + Fuchs GmbH, 68307 Mannheim (DE)
(72) Erfinder: Hofmann, Hilmar, 69502 Hemsbach (DE); Opper, Rüdiger, 67240 Bobenheim-Roxheim (DE); Kirsch, Martin, 68259 Mannheim (DE)
(74) Vertreter: Schiffer, Axel Martin

(56) Entgegenhaltungen:
- WO-A-02/39720
- WO-A-2006/065563
- DE-B3- 10 313 036
- US-A- 5 965 879
- US-A1- 2004 091 158

## Beschreibung

Die vorliegende Erfindung betrifft in einem ersten Aspekt ein Verfahren zum Bestimmen der Position eines Fahrzeugs nach dem Oberbegriff des Anspruchs 1.

In einem weiteren Gesichtspunkt bezieht sich die Erfindung auf eine Vorrichtung zum Bestimmen der Position eines Fahrzeugs nach dem Oberbegriff des Anspruchs 17.

Außerdem betrifft die Erfindung ein Computerprogramm und ein Computerprogrammprodukt.

Ein gattungsgemäßes Verfahren ist beispielsweise in DE 199 10 933 A1 offenbart. Hierbei wird ein Fahrzeug entlang einer Bahn, welche grundsätzlich entlang einer beliebigen Kurve verlaufen kann, bewegt und zur Positionsbestimmung sind entlang der Bahn eindimensionale Barcodes angeordnet.

Die Erfindung bezieht sich insbesondere auf Fahrzeuge wie EinschienenHängebahnen, Regalbediengeräte, Krananlagen oder sonstige verfahrbare Geräte, die entlang einer Bahn oder auf oder parallel zu einer vorgegebenen Fläche verfahrbar sind.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite lässt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgern redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Außerdem erlaubt keines der bekannten Systeme zusätzlich zur Positionsbestimmung in Fahrtrichtung auch eine Positionsbestimmung quer zur Fahrtrichtung. Eine solche kann etwa zum automatischen Ausgleich von temperatur- oder lastwechselbedingten Biegeverformungen wünschenswert sein. Darüber hinaus sind die erforderlichen Abtastelemente, bevorzugt Lichtschranken, anfällig für Dejustierungen und Verschmutzungen und damit wartungsintensiv. Dies spielt insbesondere eine Rolle bei Systemen mit einer Vielzahl von nebeneinander angeordneten Abtastelementen.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwändig und anfällig gegen Verformungen des Codeträgers. Einige der oben genannten Systeme sind ferner sehr empfindlich gegen Änderungen der Orientierung der Codeträger gegenüber dem Codeleser.

Eine grundsätzliche Anforderung und Aufgabenstellung besteht bei solchen Systemen zur Positionsbestimmung außerdem darin, eine aktuelle Positionsinformation möglichst zeitnah oder in Echtzeit an einem Ausgang des Systems oder der Vorrichtung bereitzustellen. In diesem Zusammenhang ist zu berücksichtigen, dass die Bildverarbeitung bei kostengünstigen kamerabasierten optischen Messaufnehmern eine Zeit von etwa 10 bis 20 ms benötigt. Die Belichtungszeit des Kamerachips, welche typischerweise etwa 50µs beträgt, fällt gegenüber dieser Zeitspanne von 10 bis 20ms, welche auch als Latenzzeit bezeichnet wird, kaum ins Gewicht.

Als eine Aufgabe der Erfindung kann angesehen werden, ein Verfahren bereitzustellen und eine Vorrichtung zu schaffen, welche eine verbesserte Positionsauflösung ermöglichen und längere Fahrwege erlauben. Darüber hinaus sollen die aus den jeweiligen Markern gewonnene Positionsinformation besonders rasch bereitgestellt werden. Außerdem soll ein geeignetes Computerprogramm angegeben werden.

Diese Aufgabe wird in einem ersten Gesichtspunkt der Erfindung durch das Verfahren mit den Merkmalen des Anspruchs 1 gelöst.

In einem weiteren Gesichtspunkt der Erfindung wird die Aufgabe durch die Vorrichtung mit den Merkmalen des Anspruchs 17 gelöst.

Schließlich wird die Aufgabe gelöst durch das Computerprogramm mit den Merkmalen des Anspruchs 18 und das Computerprogrammprodukt mit den Merkmalen des Anspruchs 19.

Das Verfahren der oben genannten Art ist erfindungsgemäß dadurch weitergebildet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker bestimmbar ist, dass mittels Bildverarbeitung charakteristische Strukturen der Marker automatisch ermittelt werden, dass unter Berücksichtigung der ermittelten charakteristischen Strukturen eine Untergruppe von Pixeln der Digitalkamera ausgewählt wird, dass die charakteristischen Strukturen der Marker wenigstens teilweise von den Pixeln der Untergruppe erfasst werden und dass zur Positionsbestimmung des Fahrzeugs in einem Normalbetrieb nur Pixel der Untergruppe mittels Bildverarbeitung ausgewertet werden.

Die Vorrichtung der oben genannten Art ist erfindungsgemäß weitergebildet durch eine an dem Fahrzeug anzuordnende Digitalkamera zum Erfassen von entlang der Bahn angeordneten Markern, eine mit der Digitalkamera verbundene Recheneinrichtung, welche eingerichtet ist zum: Bestimmen einer Relativposition des Fahrzeugs bezüglich eines Markers mittels Bildverarbeitung aus einer Lage des Bilds des jeweiligen Markers im Erfassungsbereich der Digitalkamera, zum automatischen Ermitteln von charakteristischen Strukturen der Marker mittels Bildverarbeitung, zum automatischen Auswählen einer Untergruppe von Pixeln der Digitalkamera unter Berücksichtigung der ermittelten charakteristischen Strukturen und zum Auswerten von Pixeln der Untergruppe mittels Bildverarbeitung zur Positionsbestimmung des Fahrzeugs in einem Normalbetrieb.

Bevorzugte Ausführungsvarianten des erfindungsgemäßen Verfahrens sind Gegenstand der abhängigen Ansprüche.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Das erfindungsgemäße Verfahren, bei welchem es sich um ein Auflichtverfahren handelt, kann insbesondere auch eine Positionsinformation für ein stillstehendes Fahrzeug liefern und, im Unterschied zu Verfahren aus dem Stand der Technik, ist auch eine Positionsbestimmung quer zur Fahrt- oder Bewegungsrichtung möglich.

Eine wesentliche Erkenntnis der Erfindung kann weiterhin darin gesehen werden, dass zur Bestimmung der gewünschten Positionsinformation nicht alle Pixel des Erfassungsbereichs der Digitalkamera ausgewertet werden müssen. Vielmehr reicht es aus, wesentliche Teile des digitalen Bilds einer Bildverarbeitung zu unterziehen.

Als erster Kerngedanke der Erfindung kann demgemäß erachtet werden, charakteristische Strukturen der Marker automatisch zu ermitteln. Gemäß einem weiteren wesentlichen Kerngedanken der Erfindung wird sodann eine Untergruppe von Pixeln der Digitalkamera gezielt so ausgewählt, dass die charakteristischen Strukturen der Marker wenigstens teilweise von den Pixeln der Untergruppe erfasst werden.

Schließlich werden gemäß einem dritten Kerngedanken der Erfindung zur Positionsbestimmung des Fahrzeugs in einem Normalbetrieb nur die Pixel der zuvor ausgewählten Untergruppe ausgewertet.

Ein wichtiger Vorteil der vorliegenden Erfindung ist, dass die gewünschte Positionsinformation deutlich schneller bereitgestellt werden kann.

In diesem Zusammenhang kann man davon ausgehen, dass die Latenzzeit im Wesentlichen proportional ist zum Verhältnis der Anzahl der auszuwertenden Pixel zur Gesamtzahl der Pixel der Digitalkamera. Demgemäß sollten Reduzierungen der Latenzzeit auf 10% der oben genannten Werte und darunter möglich sein.

Ein weiterer wesentlicher Vorteil der Erfindung kann darin gesehen werden, dass die erfindungsgemäßen Verbesserungen im Wesentlichen nicht durch apparativen Zusatzaufwand, sondern durch geschicktes Betreiben der vorhandenen Komponenten erzielt wird.

Als Digitalkamera können grundsätzlich bekannte und verfügbare Komponenten eingesetzt werden. Beispielsweise kann es sich um eine Digitalkamera mit einem CCD- oder einem CMOS-Empfängerchip handeln.

Bei besonderen Varianten kann außerdem die Recheneinrichtung in die Digitalkamera integriert sein.

Das Erkennen und Verfolgen der charakteristischen Strukturen der Marker wird erleichtert, wenn die Pixel der Untergruppe mindestens einen zusammenhängenden Teilbereich des Erfassungsbereichs der Digitalkamera bilden.

Bei einer einfachen Variante beispielsweise kann der Teilbereich oder können mehrere Teilbereiche so gewählt werden, dass mindestens das Bild eines Markers vollständig in den Teilbereich fällt.

Das erfindungsgemäße Verfahren kann einerseits so durchgeführt werden und das erfindungsgemäße Computerprogramm dementsprechend so aufgebaut sein, dass bei Auswertung nur der Pixel der Untergruppe keine Identifizierung der einzelnen Marker erfolgt. Die Positionsinformation wird dann gewonnen durch Zählen der nachgewiesenen charakteristischen Strukturen, beispielsweise durch Zählen der nachgewiesenen Kanten.

Bei diesen Verfahrensvarianten kann die Positionsinformation besonders rasch bereitgestellt werden, da zum Erkennen nur der charakteristischen Strukturen vergleichsweise wenige Pixel ausreichend sein können.

Voraussetzung hierfür ist, dass die Abstände der Marker zueinander bekannt sind. Im Regelfall werden hierzu die Marker äquidistant zueinander entlang der Bahn angeordnet.

Andererseits ist es auch möglich, die Untergruppe so zu wählen, dass im Wesentlichen nur die Teile des Erfassungsbereichs der Digitalkamera ausgewertet werden, wo sich Bilder der Marker befinden.

Zweckmäßig kann hierzu der Teilbereich oder können hierzu die Teilbereiche so gewählt werden, dass Zwischenbereiche zwischen den Markern nicht erfasst werden.

Als Marker können grundsätzlich alle graphisch darstellbaren Codierungs- und Markierungstypen verwendet werden, deren Strukturen und damit die dort enthaltene Information mit einer Digitalkamera erkannt und ausgewertet werden können.

Bevorzugt werden Barcodes, insbesondere zweidimensionale Barcodes, eingesetzt.

Als charakteristische Strukturen kommen alle Strukturen der genannten Marker in Betracht, die von der der physikalischen Bildaufnahme nachgeordneten Software rasch und möglichst fehlerfrei erkannt werden können. Bei einer besonders zuverlässig arbeitenden Variante des erfindungsgemäßen Verfahrens wird der Teilbereich oder werden die Teilbereiche an Kanten und/oder Ecken der Marker als charakteristischen Strukturen ausgerichtet.

Beispielsweise können die Teilbereiche so gewählt werden, dass von mindestens zwei Markern das Bild von jeweils einer Kante in den Teilbereich oder die Teilbereiche fällt.

Damit eine festgestellte Relativposition bezüglich eines bestimmten Markers grundsätzlich eindeutig einer bestimmten Absolutposition des Fahrzeugs zugeordnet werden kann, ist es weiterhin bevorzugt, wenn die verwendeten Marker unterschiedlich sind, also mittels Bildverarbeitung eindeutig unterschieden werden können.

Für die Erkennung und Auswertung der Barcodes mit Hilfe von bildverarbeitenden Verfahren ist es zweckmäßig, wenn der Abstand zwischen einzelnen zweidimensionalen Barcodes mindestens so groß ist wie die kleinste in den Barcodes auftretende Struktur, also mindestens so groß wie eine minimale Informationseinheit, insbesondere mindestens so groß wie ein Bit, des zweidimensionalen Barcodes.

Bei einer zweckmäßigen Variante des erfindungsgemäßen Verfahrens werden in einem Ausgangsschritt mindestens einmal alle Pixel des Erfassungsbereichs der Digitalkamera mittels Bildverarbeitung ausgewertet. Es liegt dann mindestens einmal die maximalmögliche Bildinformation vor und die Suche der charakteristischen Strukturen der Marker und die gezielte Auswahl der Untergruppe von Pixeln kann so mit der bestmöglichen Datengrundlage erfolgen.

Zur Verifizierung einer durch Inkrementalschritte ermittelten Position des Fahrzeugs kann es außerdem zweckmäßig sein, wenn der Ausgangsschritt wiederkehrend, insbesondere in regelmäßigen Abständen, durchgeführt wird.

Grundsätzlich kann es in bestimmten Situationen ausreichend sein, den Ausgangsschritt, also die komplette Auswertung des Erfassungsbereichs der Digitalkamera nur einmal durchzuführen und anschließend einen geeigneten Teilbereich des Erfassungsbereichs auszuwählen. Wenn dann, beispielsweise nach Ausschalten und erneutem Einschalten des Geräts, die letzte Positionsinformation nicht bekannt ist, kann in bestimmten Messsituationen und bei geeigneter Dimensionierung des Teilbereichs immer noch wenigstens eine inkrementale Weginformation erhalten werden. Bei besonders bevorzugten Ausführungsvarianten wird aber der Ausgangsschritt jedenfalls dann durchgeführt, wenn die letzte Position des Fahrzeugs unbekannt ist.

Bei einer besonders bevorzugten Weiterbildung des erfindungsgemäßen Verfahrens erfolgt zeitlich parallel mit dem Ausgangsschritt eine Vielzahl von Positionsbestimmungen auf Grundlage von Auswertungen der Pixel der Untergruppe. Die hierbei durch den Ausgangsschritt gewonnene Information kann herangezogen werden, um die Messergebnisse, die durch Auswertung der Untergruppe erhalten werden, zu überprüfen. Da der normale Messbetrieb dabei nicht unterbrochen wird, kann die Messinformation besonders zuverlässig und außerdem schnell bereitgestellt werden.

Grundsätzlich kann es ausreichend sein, im normalen Messbetrieb immer mit demselben Ausschnitt des Erfassungsbereichs zu arbeiten, die Untergruppe also einmal initial festzulegen, im normalen Messbetrieb dann aber unverändert zu lassen.

Aufgrund der generellen Zielsetzung, nur so viele Pixel, wie unbedingt nötig, auszuwerten, kann es aber vorteilhaft sein, den auszuwertenden Ausschnitt des Erfassungsbereichs, insbesondere wenn sich das Fahrzeug rasch bewegt, nach- oder mitzuführen. Zweckmäßig wird hierzu der Ausgangsschritt mindestens zweimal durchgeführt, aus den dabei gewonnenen Positionsdaten wird eine Geschwindigkeit des Fahrzeugs ermittelt und die auszuwertenden Pixel der Untergruppe werden in Abhängigkeit von der ermittelten Geschwindigkeit nachgeführt.

Eine Positionsbestimmung mit dem hier beschriebenen Verfahren ist grundsätzlich auch in zwei Dimensionen möglich, es kann also eine Positionsbestimmung des Fahrzeugs in x-Richtung und in y-Richtung durchgeführt werden. Hierzu können die Marker, beispielsweise also die zweidimensionalen Barcodes, in mehreren Reihen entlang der Bar angeordnet werden.

Prinzipiell kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer Weiterbildung des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann direkt ausgegeben und beispielsweise von einer speicherprogrammierbaren Steuerung an andere Komponenten weitergegeben werden.

Die Schritte des erfindungsgemäßen Verfahrens werden bevorzugt auf der Recheneinrichtung als Computerprogramm ausgeführt.

In grundsätzlich bekannter Weise kann dieses Computerprogramm auf einem computerlesbaren Datenträger, insbesondere in einem ROM eines Mikrocontrollers oder eines programmierbaren Logikbausteins, gespeichert sein.

Weitere Vorteile und Merkmale der Erfindung werden nachstehend mit Bezug auf die beigefügten schematischen Figuren beschrieben. Hierin zeigt:
- Fig. 1: eine schematische Seitenansicht einer erfindungsgemäßen Vorrichtung an einer Laufkatze an einem Kranbalken;

- Fig. 2: ein erstes Beispiel für die Auswahl von Teilbereichen des Erfassungsbereichs; und
- Fig. 3: ein zweites Beispiel für die Auswahl eines einzelnen Teilbereichs des Erfassungsbereichs.

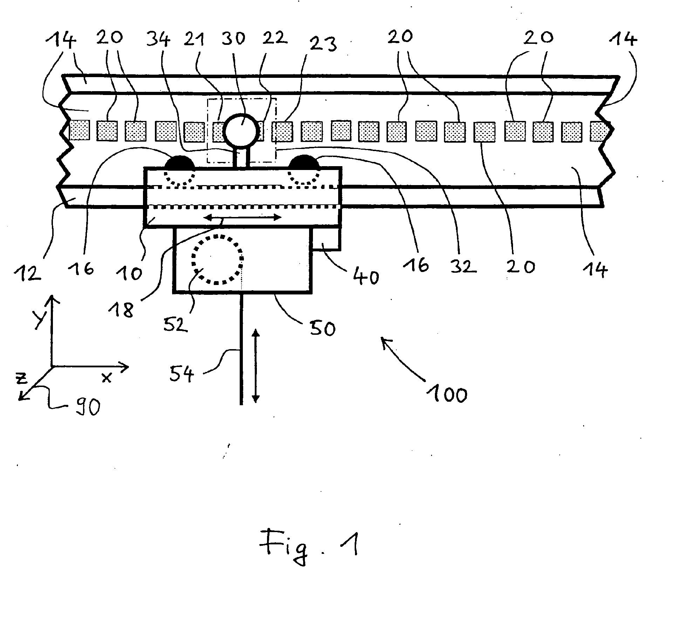

Ein Anwendungsbeispiel für das erfindungsgemäße Verfahren und eine erfindungsgemäße Vorrichtung 100 wird mit Bezug auf Figur 1 erläutert. Gezeigt ist dort ein Fahrzeug 10, welches auf einem Träger 14 mit Hilfe von Rollen 16 und einem hier nicht gezeigten Antrieb verfahrbar ist. Fahrzeuge der in Figur 1 gezeigten Art werden auch als Laufkatzen bezeichnet. Der Träger 14 bildet eine Bahn 12, entlang welcher das Fahrzeug 10 beweglich ist. Die Bewegungsrichtung oder Hauptbewegungsrichtung des Fahrzeugs 10 ist in Figur 1 die x-Richtung und durch einen Doppelpfeil 18 angedeutet. In einem Unterbau 50 des Fahrzeugs 10 ist eine hier schematisch dargestellte Seilwinde 52 positioniert, mit welcher über ein Seil 54 Lasten geladen und transportiert werden können.

Die erfindungsgemäße Vorrichtung 100 weist als wesentliche Bestandteile eine Digitalkamera 30 und eine Recheneinrichtung 40 auf, mit welcher die Digitalkamera 30 wirkungsmäßig, typischerweise durch Verbindungskabel, verbunden ist.

Die Digitalkamera 30 ist über einen Haltearm 34 starr mit dem Fahrzeug 10 verbunden. Ein im Wesentlichen quadratischer Erfassungsbereich 32 der Digitalkamera 30 ist ebenfalls schematisch dargestellt.

Die Raumrichtungen sind in Figur 1 in einem Koordinatensystem 90 angedeutet.

In der erfindungsgemäß vorhandenen Recheneinrichtung 40 wird das erfindungsgemäße Computerprogramm abgearbeitet. Ein Computerprogrammprodukt im Sinn der Erfindung kann insbesondere die Recheneinrichtung 40 selbst mit zugehörigem ROM-Speicher sein.

Wesentlicher Bestandteil des hier beschriebenen erfindungsgemäßen optischen Positionierungssystems ist außerdem eine Vielzahl von insbesondere jeweils unterschiedlichen Markern 20, wobei es sich im gezeigten Beispiel um zweidimensionale Barcodes handelt. Diese Marker 20 sind entlang des Trägers äquidistant angebracht. Typischerweise handelt es sich hierbei um aufgeklebte Bänder. In der gezeigten Situation werden von der Digitalkamera 30 die Marker 21 und 22 vollständig erfasst. Außerdem wird ein Randbereich des Markers 23 erfasst.

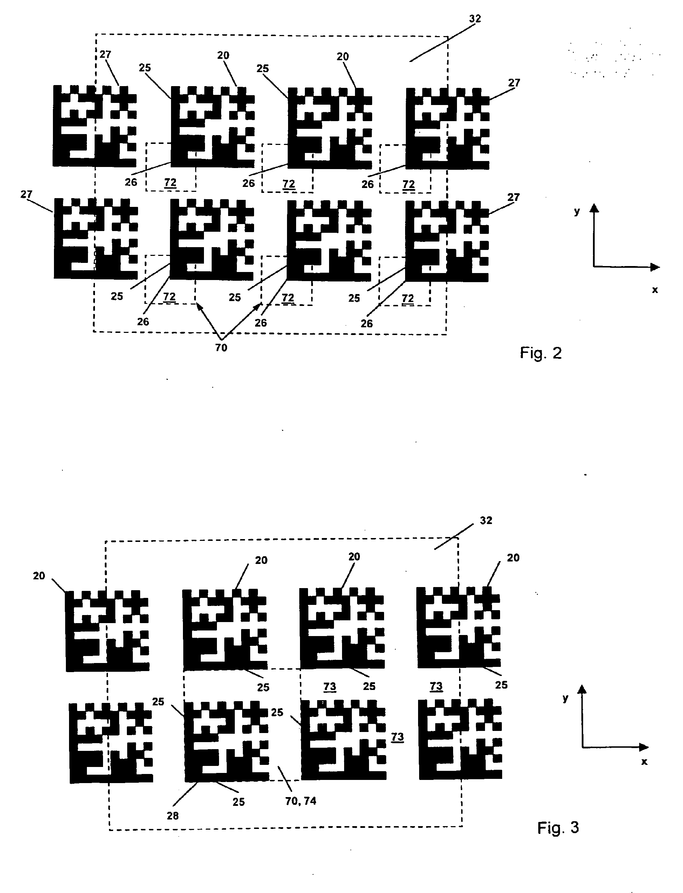

Die Arbeitsweise der erfindungsgemäßen Vorrichtung und des erfindungsgemäßen Verfahrens werden mit Bezug auf die Figuren 2 und 3 näher erläutert.

Fig. 2 zeigt ein erstes Beispiel für die Auswahl von Teilbereichen aus einem Erfassungsbereich 32 einer Digitalkamera 30 einer erfindungsgemäßen Vorrichtung 100.

Äquivalente Teile sind in allen Figuren mit denselben Bezugszeichen versehen.

Abweichend von der in Fig. 1 dargestellten Ausführungsvariante sind in Fig. 2 die Marker 20, 27, wobei es sich zum zweidimensionale Barcodes handelt, in zwei Reihen positioniert. Die Barcodes 20, 27 sind dabei rastermäßig äquidistant zueinander angeordnet. Bei diesem Beispiel ist demgemäß eine Positionsbestimmung in x-Richtung und, in einem kleinen Bereich, auch in y-Richtung, möglich. In x-Richtung hat man sich die dargestellten Reihen von Barcodes prinzipiell beliebig weit fortgesetzt vorzustellen. In den in Fig. 2 und 3 gezeigten Beispielen sind die Barcodes 20, 27, 28 der Einfachheit halber identisch dargestellt. In Wirklichkeit handelt es sich jedoch um unterschiedliche und mit Hilfe des hier beschriebenen Systems unterscheidbare Barcodes.

Der Erfassungsbereich 32 der Digitalkamera umfasst, wie aus Fig. 2 ersichtlich, die vier innen liegenden Barcodes 20 vollständig. Die außen liegenden Barcodes 27 werden jeweils nur zur Hälfte erfasst. Nach Durchführung des Ausgangsschritts, also nach Auswertung des gesamten Erfassungsbereichs 32, sucht das erfindungsgemäße Computerprogramm zunächst die Ecken 26 und/oder die Kanten 25 der Barcodes 20, 27. Sodann werden im Wesentlichen quadratische Teilbereiche 72 ausgewählt und so positioniert, dass die Ecken 26 der Barcodes 20 jeweils mittig in die Teilbereiche 72 fallen. Gemeinsam bilden die Teilbereiche 72 die erfindungsgemäße Untergruppe 70 von Pixeln.

Im laufenden Messbetrieb werden die Teilbereiche 72 auf Grundlage einer ermittelten Geschwindigkeit mitgeführt. Wenn sich beispielsweise in Fig. 2 das Fahrzeug gegenüber den Barcodes 20, 27 nach rechts bewegt, werden die Teilbereiche 72 im Fenster des Erfassungsbereichs 32 entsprechend nach links verschoben. Wenn die ganz links liegenden Teilbereiche 72 dann in den linken Rand des Erfassungsbereichs 32 laufen, werden am rechten Rand des Erfassungsbereichs 32 entsprechend neue Teilbereiche 72 auftauchen.

Bei dem in Fig. 3 gezeigten Beispiel wird abweichend von der in Fig. 2 dargestellten Variante die Untergruppe 70 durch nur einen einzigen Teilbereich 74 von Pixeln gebildet. Dieser Teilbereich 74 ist so gewählt, dass genau ein Barcode 28 vollständig in diesen ebenfalls im Wesentlichen quadratischen Teilbereich 74 fällt. Im Unterschied zu Fig. 1 ist deshalb bei der in Fig. 3 gezeigten Situation eine Identifizierung des Barcodes 28 grundsätzlich möglich.

Das Auffinden des Teilbereichs 74 durch Auswertung des gesamten Erfassungsbereichs 32 im Ausgangsschritt ist zuverlässig möglich durch Erkennung der Kanten 25 der Barcodes 20, 28.

Eine Verbesserung kann hierbei darin bestehen, den Teilbereich 74 so zu verkleinern, dass die Bereiche 73 zwischen den Barcodes 20, worin keine Information enthalten ist, nicht abgedeckt werden.

Mit der vorliegenden Erfindung wird ein neuartiges Verfahren zur optischen Positionsbestimmung beschrieben, bei welchem die Positionsinformation besonders rasch bereitgestellt werden kann. Das Verfahren basiert grundsätzlich auf einer bildmäßigen Erkennung von Markern, die entlang einer Bahn angeordnet sind. Insbesondere werden dabei einfache Objekte in einem Kameralesebereich verfolgt.

Die Erfindung beruht unter anderem auf dem Grundgedanken, dass ein Verfolgen von einfachen Objekten, wie Kanten oder Ecken, wesentlich einfacher zu realisieren ist als eine komplette Bilderkennung und Decodierung der Codemarken. Das erfindungsgemäße Verfahren teilt sich demgemäß in zwei Teile, die insbesondere parallel abgearbeitet werden können. Der erste Teil des Verfahrens, der in der obigen Beschreibung als Ausgangsschritt bezeichnet wird, beinhaltet eine komplette Bilderkennung und Decodierung der Barcodes. Im zweiten Teil des Verfahrens werden beispielsweise Kanten als charakteristische Strukturen der Barcode gesucht und verfolgt. Die Position der Kanten kann aufgrund einer letzten bekannten Position und der aktuellen Geschwindigkeit geschätzt werden. Hieraus ergibt sich ein sehr schnell arbeitender Algorithmus. Beide Verfahrensteile können demgemäß parallel arbeiten, jedoch wird der erste Teil des Verfahrens nur in der freien Zeit des zweiten Teils ausgeführt und wird somit nicht bei jedem Bild angewendet. Da der zweite Teil des Verfahrens sehr rasch durchgeführt werden kann, weil dort nur vergleichsweise einfache Operationen durchgeführt werden müssen, bleibt für den ersten Teil noch genügend Zeit und, typischerweise nach einigen Bildern, ist auch eine komplette Bilderkennung und Decodierung der Barcodes gemäß dem ersten Teil des Verfahrens abgeschlossen.

Das erfindungsgemäße Verfahren kann eingesetzt werden, wenn die Geschwindigkeit eines bildverarbeitenden Prozessors nicht ausreicht und die Art der Messaufgabe eine Reduzierung des auszuwertenden Pixelbereichs erlaubt.

Besonderheiten entstehen bei der Positionserkennung, wenn die letzte Position des Fahrzeugs nicht bekannt war, beispielsweise unmittelbar nach dem Einschalten oder wenn sich das Fahrzeug vorübergehend in einer Position befand, wo die Kamera keinen Barcode lesen konnte. Hierbei wird dann der zweite Teil des Verfahrens nicht ausgeführt, da er zu keinen weiteren brauchbaren Ergebnissen führt. Sobald durch den ersten Verfahrensteil eine neue Position berechnet wurde, wird diese als Grundlage für die weitere Positionsberechnung über den zweiten Teil verwendet. Da außerdem, beispielsweise aus den Messdaten des zweiten Verfahrensteils, bekannt ist, wann das Bild für den ersten Teil aufgenommen wurde und wie weit sich der Sensor oder das Fahrzeug in der Zwischenzeit bewegt hat, kann hieraus die aktuelle Position mit den Ergebnissen aus dem zweiten Teil berechnet werden.

## Patentansprüche

1. Verfahren zum Bestimmen der Position eines Fahrzeugs,
welches entlang einer Bahn (12) beweglich ist, wobei entlang der Bahn (12) Marker (20), insbesondere Codeträger oder Barcodes, angeordnet sind,
**dadurch gekennzeichnet,**
**dass** die Marker (20) mit einer an dem Fahrzeug (10) angeordneten Digitalkamera (30) erfasst werden,
**dass** mittels Bildverarbeitung aus einer Lage mindestens eines Markerbilds im Erfassungsbereich (32) der Digitalkamera (30) eine Relativposition des Fahrzeugs (10) bezüglich des jeweiligen Markers (21, 22, 23) oder der jeweiligen Marker bestimmbar ist,
**dass** mittels Bildverarbeitung charakteristische Strukturen der Marker automatisch ermittelt werden,
**dass** unter Berücksichtigung der ermittelten charakteristischen Strukturen eine Untergruppe (70) von Pixeln der Digitalkamera (30) ausgewählt wird,
**dass** die charakteristischen Strukturen der Marker (20) wenigstens teilweise von den Pixeln der Untergruppe (70) erfasst werden und
**dass** zur Positionsbestimmung des Fahrzeugs (10) in einem Normalbetrieb nur Pixel der Untergruppe (70) mittels Bildverarbeitung ausgewertet werden.

2. Verfahren nach Anspruch 1,
**dadurch gekennzeichnet,**
**dass** in einem Ausgangsschritt mindestens einmal alle Pixel des Erfassungsbereichs (32) der Digitalkamera (30) mittels Bildverarbeitung ausgewertet werden.

3. Verfahren nach Anspruch 2,
**dadurch gekennzeichnet,**
**dass** der Ausgangsschritt wiederkehrend, insbesondere in regelmäßigen Abständen, durchgeführt wird.

4. Verfahren nach einem der Ansprüche 2 oder 3,
**dadurch gekennzeichnet,**
**dass** der Ausgangsschritt durchgeführt wird, wenn die letzte Position des Fahrzeugs (10) unbekannt ist.

5. Verfahren nach einem der Ansprüche 2 bis 4,
**dadurch gekennzeichnet,**
**dass** zeitlich parallel mit dem Ausgangsschritt eine Vielzahl von Positionsbestimmungen auf Grundlage von Auswertungen der Pixel der Untergruppe (70) erfolgen.

6. Verfahren nach einem der Ansprüche 2 bis 5,
**dadurch gekennzeichnet,**
**dass** der Ausgangsschritt mindestens zweimal durchgeführt wird,
**dass** aus den dabei gewonnen Positionsdaten eine Geschwindigkeit des Fahrzeugs (10) ermittelt wird und
**dass** die auszuwertenden Pixel der Untergruppe (70) in Abhängigkeit von der ermittelten Geschwindigkeit nachgeführt werden.

7. Verfahren nach einem der Ansprüche 1 bis 6,
**dadurch gekennzeichnet,**
**dass** die Marker (20) äquidistant entlang der Bahn (12) angeordnet werden.

8. Verfahren nach einem der Ansprüche 1 bis 7,
**dadurch gekennzeichnet,**
**dass** die Marker (20) in mehreren Reihen entlang der Bahn (12) angeordnet werden.

9. Verfahren nach einem der Ansprüche 1 bis 8,
**dadurch gekennzeichnet,**
**dass** eine Positionsbestimmung des Fahrzeugs (10) in x-Richtung und in y-Richtung durchgeführt wird.

10. Verfahren nach einem der Ansprüche 1 bis 9,
**dadurch gekennzeichnet,**
**dass** die Pixel der Untergruppe (70) mindestens einen zusammenhängenden Teilbereich (72, 74) des Erfassungsbereichs (32) der Digitalkamera (30) bilden.

11. Verfahren nach einem der Ansprüche 1 bis 10,
**dadurch gekennzeichnet,**
**dass** der Teilbereich (74) oder die Teilbereiche (72) so gewählt wird beziehungsweise werden, dass mindestens das Bild eines Markers vollständig in den Teilbereich (72,74) fällt.

12. Verfahren nach einem der Ansprüche 1 bis 11,
**dadurch gekennzeichnet,**
**dass** der Teilbereich (74) oder die Teilbereiche (72) so gewählt wird beziehungsweise werden, dass Zwischenbereiche (73) zwischen den Markern (20) nicht erfasst werden.

13. Verfahren nach einem der Ansprüche 1 bis 12,
**dadurch gekennzeichnet,**
**dass** als Marker (20) zweidimensionale Barcodes verwendet werden.

14. Verfahren nach einem der Ansprüche 1 bis 13,
**dadurch gekennzeichnet,**
**dass** der Teilbereich (74) oder die Teilbereiche (72) an Kanten (25) und/oder Ecken (26) der Marker (20) als charakteristischen Strukturen ausgerichtet werden.

15. Verfahren nach Anspruch 14,
**dadurch gekennzeichnet,**
**dass** von mindestens zwei Markern das Bild von jeweils einer Kante (25) in den Teilbereich (74) oder die Teilbereiche (72) fällt.

16. Verfahren nach einem der Ansprüche 1 bis 15,
**dadurch gekennzeichnet,**
**dass** aus der Relativposition des Fahrzeugs (10) bezüglich eines bestimmten Markers (21, 22, 23) und einer bekannten Absolutposition dieses Markers (21, 22, 23) eine Absolutposition des Fahrzeugs (10) bestimmt wird.

17. Vorrichtung zum Bestimmen der Position eines Fahrzeugs, welches entlang einer Bahn (12) beweglich ist, insbesondere zur Durchführung des Verfahrens nach einem der Ansprüche 1 bis 16,
**gekennzeichnet durch**
eine an dem Fahrzeug (10) anzuordnende Digitalkamera (30) zum Erfassen von entlang der Bahn (12) angeordneten Markern (20),
eine mit der Digitalkamera (30) verbundene Recheneinrichtung (40), welche eingerichtet ist:
- zum Bestimmen einer Relativposition des Fahrzeugs (10) bezüglich eines Markers (21, 22, 23) mittels Bildverarbeitung aus einer Lage des Bilds des jeweiligen Markers (21, 22, 23) im Erfassungsbereich (32) der Digitalkamera (30),
- zum automatischen Ermitteln von charakteristischen Strukturen (25, 26) der Marker (20) mittels Bildverarbeitung,
- zum automatischen Auswählen einer Untergruppe (70) von Pixeln der Digitalkamera (30) unter Berücksichtigung der ermittelten charakteristischen Strukturen (25, 26) und
- zum Auswerten von Pixeln der Untergruppe (70) mittels Bildverarbeitung zur Positionsbestimmung des Fahrzeugs (10) in einem Normalbetrieb.

18. Computerprogramm mit Programmcodemitteln, um die Rechen- und Auswerteschritte eines Verfahrens nach einem der Ansprüche 1 bis 16 durchzuführen, wenn das Computerprogramm auf einem mit der Digitalkamera (30) wirkungsmäßig verbundenem Computer, insbesondere der Recheneinrichtung (40) gemäß Anspruch 17, ausgeführt wird.

19. Computerprogrammprodukt mit Programmcodemitteln, die auf einem Computerlesbaren Datenträger gespeichert sind, um die Rechen- und Auswerteschritte eines Verfahrens nach einem der Ansprüche 1 bis 16 durchzuführen, wenn das Computerprogramm auf einem mit der Digitalkamera (30) wirkungsmäßig verbundenem Computer, insbesondere der Recheneinrichtung (40) gemäß Anspruch 17, ausgeführt wird.

## Claims

1. A method for determining the position of a vehicle which is capable of being moved along a fixed path (12), wherein markers (20), more particularly code carriers or barcodes, are disposed along said path (12),
**characterized in that**
said markers (20) are registered by a digital camera (10) mounted on said vehicle (30),
that the relative position of said vehicle (10) in relation to the respective marker(s) (21, 22, 23, 23) can be determined from the position of at least one marker image in the acquisition range (32) of said digital camera (30) by image processing, that characteristic structures of said markers are automatically determined by image processing,
that a subgroup (70) of pixels in said digital camera (30) is selected on the basis of the characteristic structures determined,
that the characteristic structures of said markers (20) are at least partially registered by the pixels of said subgroup (70), and
that for the purpose of determining the position of said vehicle (10) under standard operating conditions, only pixels in said subgroup (70) are evaluated by image processing.

2. The method as defined in claim 1,
**characterized in that**,
in an initial step, all of the pixels in the acquisition range (32) of said digital camera (30) are analyzed at least once by image processing.

3. The method as defined in claim 2,
**characterized in that**
said initial step is repeated, more particularly at regular intervals.

4. The method as defined in claim 2 or claim 3,
**characterized in that**
the initial step is carried out when the last position of said vehicle (10) is unknown.

5. The method as defined in any one of claims 2 to 4,
**characterized in that**
a large number of position determinations take place concurrently with said initial step on the basis of evaluations of the pixels in said subgroup (70).

6. The method as defined in any one of claims 2 to 5,
**characterized in that**
the initial step is carried out at least twice,
that from the position data thus obtained the speed of said vehicle (10) is determined, and
that the pixels to be evaluated in said subgroup (70) are tracked according to the speed determined.

7. The method as defined in any one of claims 1 to 6,
**characterized in that**
said markers (20) are disposed at equal intervals along said path (12).

8. The method as defined in any one of claims 1 to 7,
**characterized in that**
said markers (20) are disposed in a plurality of rows along said path (12).

9. The method as defined in any one of claims 1 to 8,
**characterized in that**
the determination of the position of said vehicle (10) is carried out in the X-direction and in the Y-direction.

10. The method as defined in any one of claims 1 to 9,
**characterized in that**
the pixels in said subgroup (70) form at least one coherent subregion (72, 74) of the acquisition range (32) of said digital camera (30).

11. The method as defined in any one of claims 1 to 10,
**characterized in that**
said subregion (74) or said subregions (72) is/are selected such that at least the image of one marker falls completely within said subregion (72, 74).

12. The method as defined in any one of claims 1 to 11,
**characterized in that**
said subregion (74) or said subregions (72) is/are selected such that intermediate regions (73) between said markers (20) are not registered.

13. The method as defined in any one of claims 1 to 12,
**characterized in that**
the markers (20) used are two-dimensional barcodes.

14. The method as defined in any one of claims 1 to 13,
**characterized in that**
said subregion (74) or said subregions (72) is/are aligned at the edges (25) and/or corners (26) of said markers (20) as characteristic structures thereof.

15. The method as defined in claim 14,
**characterized in that**
of at least two markers the image of an edge (25) thereof falls within said subregion (74) or said subregions (72).

16. The method as defined in any one of claims 1 to 15,
**characterized in that**
the absolute position of said vehicle (10) is determined from the relative position of said vehicle (10) in relation to a certain marker (21, 22, 23) and from a known absolute position of this marker (21, 22, 23).

17. A device for determining the position of a vehicle which is capable of being moved along a fixed path (12), more particularly for carrying out the method as defined in any one of claims 1 to 16,
**characterized by**
a digital camera (30) to be mounted on said vehicle (10) for the purpose of detecting markers (20) disposed along said path (12),
a logic device (40) connected to said digital camera (30), which is adapted:
- to determine a relative position of said vehicle (10) in relation to a marker (21, 22, 23) by image processing from the position of the image of the relevant marker (21, 22, 23) in the acquisition range (32) of said digital camera (30),
- to automatically ascertain characteristic structures (25, 26) of said markers (20) by image processing,
- to automatically select a subgroup (70) of pixels of said digital camera (30) on the basis of the determined characteristic structures (25, 26), and
- to evaluate pixels pertaining to said subgroup (70) by image processing to determine the position of said vehicle (10) under standard operating conditions.

18. A computer program incorporating program code means for the purpose of carrying out the logical and evaluating steps of a method as defined in any one of claims 1 to 16, when the computer program is executed on a computer operatively connected to said digital camera (30), more particularly on a logic device (40) as defined in claim 17.

19. A computer program product incorporating program code means stored on a computer-readable data medium for the purpose of carrying out the logical and evaluating steps of a method as defined in any one of claims 1 to 16, when the computer program is executed on a computer operatively connected to said digital camera (30), more particularly on a logic device (40) as defined in claim 17.

## Revendications

1. Procédé pour déterminer la position d'un véhicule pouvant se déplacer le long d'une trajectoire (12), dans lequel sont disposés, le long de la trajectoire (12), des repères (20), en particulier des supports de code ou des codes à barres, ***caractérisé***
***en ce que*** les repères (20) sont acquis avec une caméra numérique (30) disposée sur le véhicule (10),
*en ce qu*'à partir d'une position d'au moins une image de repère dans la zone d'acquisition (32) de la caméra numérique (30), une position relative du véhicule (10) par rapport au repère (21, 22, 23) ou aux repères en question peut être déterminée par traitement de l'image,
***en ce que*** des structures caractéristiques des repères sont déterminées automatiquement par traitement de l'image,
*en ce qu*'un sous-groupe (70) de pixels de la caméra numérique (30) est sélectionné en tenant compte des structures caractéristiques déterminées,
***en ce que*** les structures caractéristiques des repères (20) sont au moins partiellement acquises dans les pixels du sous-groupe (70), et
***en ce que**,* pour déterminer la position du véhicule (10) en fonctionnement normal, seuls les pixels du sous-groupe (70) sont analysés au moyen d'un traitement de l'image.

2. Procédé selon la revendication 1,
***caractérisé***
***en ce que****,* dans une étape initiale, tous les pixels de la zone d'acquisition (32) de la caméra numérique (30) sont analysés au moins une fois au moyen d'un traitement de l'image.

3. Procédé selon la revendication 2,
***caractérisé***
***en ce que*** l'étape initiale est exécutée de façon répétitive, en particulier à intervalles réguliers.

4. Procédé selon l'une quelconque des revendications 2 ou 3,
***caractérisé***
***en ce que*** l'étape initiale est exécutée quand la dernière position du véhicule (10) est inconnue.

5. Procédé selon l'une quelconque des revendications 2 à 4,
***caractérisé***
***en ce que*** plusieurs déterminations de position ont lieu parallèlement à l'étape initiale dans le temps sur la base d'analyses des pixels du sous-groupe (70).

6. Procédé selon l'une quelconque des revendications 2 à 5,
***caractérisé***
***en ce que*** l'étape initiale est exécutée au moins deux fois,
*en ce qu*'une vitesse du véhicule (10) est déterminée à partir des données de position ainsi obtenues, et
***en ce que*** les pixels du sous-groupe (70) à analyser sont ajoutés en fonction de la vitesse déterminée.

7. Procédé selon l'une quelconque des revendications 1 à 6,
***caractérisé***
***en ce que*** les repères (20) sont disposés à égale distance le long de l'itinéraire (12).

8. Procédé selon l'une quelconque des revendications 1 à 7,
***caractérisé***
***en ce que*** les repères (20) sont disposés en plusieurs rangs le long de la trajectoire (12).

9. Procédé selon l'une quelconque des revendications 1 à 8,
*caractérisé*
*en ce qu*'une détermination de la position du véhicule (10) est réalisée dans la direction de l'axe x et de l'axe y.

10. Procédé selon l'une quelconque des revendications 1 à 9,
***caractérisé***
***en ce que*** les pixels du sous-groupe (70) forment au moins une zone partielle (72, 74) d'un seul tenant de la zone d'acquisition (32) de la caméra numérique (30).

11. Procédé selon l'une quelconque des revendications 1 à 10,
***caractérisé***
***en ce que*** la zone partielle (74) ou les zones partielles (72) est/sont choisie(s) de telle façon que l'image d'au moins un marqueur entre complètement dans la zone partielle (72, 74).

12. Procédé selon l'une quelconque des revendications 1 à 11,
***caractérisé***
***en ce que*** la zone partielle (74) ou les zones partielles (72) est/sont choisie(s) de telle façon que les zones intermédiaires (73) entre les marqueurs (20) ne soient pas acquises.

13. Procédé selon l'une quelconque des revendications 1 à 12,
***caractérisé***
***en ce que*** des codes à barres bidimensionnels sont utilisés comme repères (20).

14. Procédé selon l'une quelconque des revendications 1 à 13,
***caractérisé***
***en ce que*** la zone partielle (74) ou les zones partielles (72) est/sont orientée(s) sur des bords (25) et/ou des coins (26) des repères (20) servant de structures caractéristiques.

15. Procédé selon la revendication 14,
***caractérisé***
***en ce que*** l'image d'un bord (25) de chacun d'au moins deux repères se trouve dans la zone partielle (74) ou les zones partielles (72).

16. Procédé selon l'une quelconque des revendications 1 à 15,
***caractérisé***
***en ce* qu'**une position absolue du véhicule (10) est déterminée à partir de la position relative du véhicule (10) par rapport à un repère (21, 22, 23) donné et d'une position absolue connue de ce repère (21, 22, 23).

17. Dispositif pour déterminer la position d'un véhicule pouvant se déplacer le long d'une trajectoire (12), en particulier pour la mise en oeuvre du procédé selon l'une quelconque des revendications 1 à 16,
***caractérisé***
***en ce qu'***il comporte:
une caméra numérique (30) à disposer sur le véhicule (10) pour acquérir les repères (20) disposés le long de la trajectoire (12),
un dispositif de calcul (40) relié à la caméra numérique (30), qui est équipé pour :
- déterminer une position relative du véhicule (10) par rapport à un repère (21, 22, 23) au moyen d'un traitement de l'image à partir d'une position de l'image du repère (21, 22, 23) en question dans la zone d'acquisition (32) de la caméra numérique (30),
- déterminer automatiquement des structures caractéristiques (25, 26) des repères (20) au moyen d'un traitement de l'image,
- sélectionner automatiquement un sous-groupe (70) de pixels de la caméra numérique (30) en tenant compte des structures caractéristiques (25, 26) déterminées, et
- analyser les pixels du sous-groupe (70) au moyen d'un traitement de l'image pour déterminer la position du véhicule (10) en fonctionnement normal.

18. Programme informatique avec des moyens de code de programme pour exécuter les étapes de calcul et d'analyse d'un procédé selon l'une quelconque des revendications 1 à 16 quand le programme informatique est exécuté sur un ordinateur en liaison active avec la caméra numérique (30), en particulier le dispositif de calcul (40) selon la revendication 17.

19. Produit de programme informatique avec des moyens de code de programme qui sont enregistrés sur un support de données pouvant être lu par un ordinateur pour exécuter les étapes de calcul et d'analyse d'un procédé selon l'une quelconque des revendications 1 à 16 quand le programme informatique est exécuté sur un ordinateur en liaison active avec la caméra numérique (30), en particulier l'unité de calcul (40) selon la revendication 17.
